(19) Europäisches Patentamt
European Patent Office
Office européen des brevets

(11) **EP 1 125 955 B1**

(12) **EUROPÄISCHE PATENTSCHRIFT**

(45) Veröffentlichungstag und Bekanntmachung des Hinweises auf die Patenterteilung:
**06.08.2003 Patentblatt 2003/32**

(51) Int Cl.[7]: **C08F 290/04**, C09J 151/00, C08F 2/22

(21) Anmeldenummer: **01103201.8**

(22) Anmeldetag: **12.02.2001**

(54) **Haftklebstoffe**

Adhesives

Adhésifs

(84) Benannte Vertragsstaaten:
**BE DE FR GB IT NL**

(30) Priorität: **19.02.2000 DE 10007692**

(43) Veröffentlichungstag der Anmeldung:
**22.08.2001 Patentblatt 2001/34**

(73) Patentinhaber: **BASF AKTIENGESELLSCHAFT**
**67056 Ludwigshafen (DE)**

(72) Erfinder:
- **Centner, Alexander, Dr.**
**67127 Rödersheim-Gronau (DE)**
- **Christie, David, Dr.**
**68165 Mannheim (DE)**

(56) Entgegenhaltungen:
**WO-A-95/04767** **WO-A-95/32229**

- **HEUTS, J.P.A. ET AL.: "The Effect of Ester Chain Length and Temperature on the Catalytic Chain Transfer Polymerisation of Methacrylates" MACROMOLECULES , Bd. 32, 1999, Seiten 3907-3912, XP000830965 Easton**

**EP 1 125 955 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

## Beschreibung

Die Erfindung betrifft Haftklebstoffe auf Basis eines Polymerisats, welches eine Glasübergangstemperatur ($T_g$) ≤ 10°C aufweist und durch eine radikalisch initiierte Polymerisation von ethylenisch ungesättigten Monomeren in einem flüssigen Medium in Anwesenheit von > 0 und ≤ 5 Gew.-Teilen, bezogen auf 100 Gew.-Teile der zur Polymerisation eingesetzten ethylenisch ungesättigten Monomeren, wenigstens einer oligomeren Verbindung erhalten wird, die ihrerseits durch radikalisch initiierte Polymerisation von ethylenisch ungesättigten Monomeren erhalten wurde und

a) einen Gehalt an ethylenisch ungesättigten Doppelbindungen von wenigstens 50 Mol-%, und

b) ein zahlenmittleres Molekulargewicht von 500 bis 50.000 g/mol aufweist.

Haftklebstoffe bilden einen bleibenden klebrigen Film, der schon unter geringem Druck bei Raumtemperatur an den verschiedensten Oberflächen haftet (eng.: pressure sensitive adhesives, PSA). Haftklebstoffe dienen zum Herstellen selbstklebender Erzeugnisse wie Selbstklebebänder, -etiketten oder -folien. Derartige Produkte lassen sich sehr einfach anwenden und ermöglichen ein schnelles Arbeiten beim Verkleben. Es sind im Gegensatz zu Kontaktklebemassen keine Ablüftzeiten erforderlich. Auch eine sogenannte "offene Zeit", innerhalb der die Verklebung ausgeführt werden muß, existiert nicht. Die Qualität eines selbstklebenden Artikels hängt im wesentlichen davon ab, ob die innere Festigkeit (Kohäsion) und die Haftung des Klebstofffilms auf der zu beklebenden Oberfläche (Adhäsion) entsprechend der Anwendung aufeinander abgestimmt sind.

Insbesondere bei Haftklebstoffen für Bänder und Etiketten muß die Kohäsion so groß sein, daß beim Stanzen und Schneiden kein Fadenziehen bzw. Kantenaustritt auftritt, da es sonst zu Verschmutzungen der Schneidewerkzeuge und Verklebung der Schnittflächen kommt. Gleichzeitig soll die Adhäsion auf einem hohen Niveau liegen, um eine gute Haftung auf den zu beklebenden Substraten zu erreichen.

Adhäsion und Kohäsion sind im allgemeinen nicht unabhängig voneinander optimierbar. Gewünscht sind Maßnahmen, die entweder das Niveau beider Eigenschaften anheben oder eine Eigenschaft unverändert erhalten, während sich die andere Eigenschaft verbessert.

Polymerisate, die durch eine radikalisch initiierte Polymerisation von ethylenisch ungesättigten Monomeren in Anwesenheit einer ethylenisch ungesättigten oligomeren Verbindung erhalten wurden, die ihrerseits durch radikalisch initiierte Polymerisation von ethylenisch ungesättigten Monomeren erhalten wurden, sind im Stand der Technik vorbeschrieben. Sie werden beispielsweise als nichtklebrige Bindemittel in photosensitiven Formulierungen (WO 92/15628), in Wasserbasislacken (WO 95/32228, WO 95/32229 und WO 95/32255) oder hochpigmentierten Beschichtungsformulierungen (US-A 5412039) eingesetzt.

In der WO 95/04767 werden wässrige Polymerisatdispersionen offenbart, welche durch radikalisch initiierte wässrige Emulsionspolymerisationen von ethylenisch ungesättigten Monomeren in Anwesenheit einer oligomeren Verbindung erhalten wurden, die ihrerseits durch radikalisch initiierte Polymerisation von ethylenisch ungesättigten Monomeren in Anwesenheit einer Übergangsmetallverbindung als Molekulargewichtsregler erhalten wurden. Dabei wurde allgemein vorgeschlagen, diese wässrigen Polymerisatdispersionen in Abmischung mit unterschiedlichen Hilfsstoffen als Komponenten in Bindemitteln, Polituren, Tinten, Lacken und Farben sowie Dichtungsmassen und Klebstoffen einzusetzen.

Klebstoffe, speziell Schmelzklebstoffe auf Basis eines Polymerisats, welches in Anwesenheit einer oligomeren Propenverbindung hergestellt wurde, sind in der DE-A 19528369 offenbart. Allerdings werden die hier eingesetzten oligomeren Propenderivate durch nichtradikalische, metallocenkatalysierte Oligomerisierung von Propen erhalten.

Aufgabe der vorliegenden Erfindung war es, neue Haftklebstoffe zur Verfügung zu stellen, welche eine gute Haftung aufweisen und Verklebungen mit hoher Kohäsion ergeben.

Demgemäß werden Haftklebstoffe zur Verfügung gestellt, die auf Basis eines Polymerisats, welches eine Glasübergangstemperatur ≤ 10°C aufweist und durch eine radikalisch initiierte Polymerisation von ethylenisch ungesättigten Monomeren in einem flüssigen Medium in Anwesenheit von > 0 und ≤ 5 Gew.-Teilen, bezogen auf 100 Gew. -Teile der zur Polymerisation eingesetzten ethylenisch ungesättigten Monomeren, wenigstens einer oligomeren Verbindung erhalten wird, die ihrerseits durch radikalisch initiierte Polymerisation von ethylenisch ungesättigten Monomeren erhalten wurde und

a) einen Gehalt an ethylenisch ungesättigten Doppelbindungen von wenigstens 50 Mol-%, und

b) ein zahlenmittleres Molekulargewicht von 500 bis 50.000 g/mol aufweist.

Oligomere Verbindungen, die durch radikalisch initiierte Polymerisation von ethylenisch ungesättigten Monomeren erhalten wurden und die einen Gehalt an ethylenisch ungesättigten Doppelbindungen von wenigstens 50 Mol-%, und ein zahlenmittleres Molekulargewicht von 500 bis 50.000 g/mol aufweisen, sind im Stand der Technik vielfach vorbeschrieben. Es sei in diesem Zusammenhang auf die Schriften WO 87/03605, WO 92/15628, WO 95/04767, WO 95/17435, WO 95/25765, WO 95/27737, WO 95/32228, WO 95/32229, WO 95/32255, WO 96/13527, WO 96/33224, WO 97/31030, WO 97/34934, WO 97/35541, WO 98/04603, WO 98/50436, EP-B 199436, EP-B 196783, EP-B 681601, EP-B 714416, US-A 4526945, US-A 4694054, US-A 5412039, US-A 5726263 und JP-A 9132610 sowie Schrauzer und Windgassen, J. Am. Chem. Soc. 1966 (88), 3738 bis 3743, Tovrog et al., J. Am. Chem. Soc. 1976 (98), 5144 bis 5153, Kukulj et al., Macromolecules 1997 (30), 7661 bis 7666, Kukulj et al., Macromolecules 1998 (31), 6034 bis 6041, Heuts et al., Macromolecules 1999 (32), 2511 bis 2519 und Heuts et al., Macromolecules 1999 (32), 3907 bis 3912, verwiesen. Erfindungsgemäß können solche oligomeren Verbindungen eingesetzt werden, deren Herstellung durch Substanz-, Lösungs-, Emulsions- oder Suspensionspolymerisation erfolgte.

Als Molekulargewichtsregler werden bei der Oligomerenherstellung häufig Übergangsmetallverbindungen eingesetzt, deren Metallion reversibel in wenigstens zwei Oxidationsstufen auftreten kann. Dabei ist das Metallion vorteilhaft ausgewählt aus der Gruppe umfassend $Fe^{2+}$, $Fe^{3+}$, $Ru^{2+}$, $Ru^{3+}$, $Cr^{2+}$, $Cr^{3+}$, $Mo^{2+}$, $Mo^{3+}$, $W^{2+}$, $W^{3+}$, $Co^{2+}$, $Co^{3+}$, $Re^{2+}$, $Re^{3+}$, $V^{2+}$, $V^{3+}$, $Mn^{2+}$, $Mn^{3+}$, $Zr^{2+}$, $Zr^{3+}$, $Zr^{4+}$, $Ti^{2+}$, $Ti^{3+}$, $Ti^{4+}$, $Ce^{2+}$ und $Ce^{3+}$. Oft wird das Metallion aus der Gruppe umfassend $Fe^{2+}$, $Fe^{3+}$, $Co^{2+}$, $Co^{3+}$, $Cr^{2+}$ und $Cr^{3+}$ ausgewählt. Bevorzugt werden kobaltorganische Verbindungen eingesetzt.

Zur Herstellung der oligomeren Verbindungen durch radikalisch initiierte Polymerisation können prinzipiell alle ethylenisch ungesättigten Monomeren eingesetzt werden, welche eine radikalisch initiierte Polymerisation eingehen. Insbesondere sind dies in einfacher Weise radikalisch polymerisierbare Monomere, wie beispielsweise Ethylen, Vinylhalogenide, wie Vinylchlorid oder Vinylidenchlorid, vinylaromatische Monomere, wie Styrol, $\alpha$-Methylstyrol, o-Chlorstyrol oder Vinyltoluole, Ester aus Vinylalkohol und 1 bis 18 C-Atome aufweisenden Monocarbonsäuren, wie Vinylacetat, Vinylpropionat, Vinyl-n-butyrat, Vinyllaurat und Vinylstearat, Ester aus vorzugsweise 3 bis 6 C-Atome aufweisenden $\alpha,\beta$-monoethylenisch ungesättigten Mono- und Dicarbonsäuren, wie insbesondere Acrylsäure, Methacrylsäure, Maleinsäure, Fumarsäure und Itaconsäure, mit im allgemeinen 1 bis 12, vorzugsweise 1 bis 8 und insbesondere 1 bis 4 C-Atome aufweisenden Alkanolen, wie besonders Acrylsäure- und Methacrylsäuremethyl-, -ethyl-, -n-butyl-, -iso-butyl und -2-ethylhexylester, Maleinsäuredimethylester oder Maleinsäure-di-n-butylester, Nitrile $\alpha,\beta$-monoethylenisch ungesättigter Carbonsäuren, wie Acrylnitril sowie $C_{4-8}$-konjugierte Diene, wie 1,3-Butadien und Isopren. In aller Regel weisen diese Monomeren in Wasser bei Normalbedingungen (25°C, 1 bar) lediglich eine mäßige bis geringe Löslichkeit auf.

Monomere, die unter den vorgenannten Bedingungen eine erhöhte Wasserlöslichkeit aufweisen, sind beispielsweise $\alpha,\beta$-monoethylenisch ungesättigte $C_3$- bis $C_5$-Mono- und $C_4$- bis $C_8$-Dicarbonsäuren, deren wasserlösliche Salze und deren Amide, wie z.B. Acrylsäure, Methacrylsäure, Maleinsäure, Fumarsäure, Itaconsäure sowie deren Alkalimetall- und Ammoniumsalze, Acrylamid und Methacrylamid, ferner Vinylsulfonsäure, 2-Acrylamido-2-methylpropansulfonsäure, Styrolsulfonsäure und deren wasserlösliche Salze sowie N-Vinylpyrrolidon. Die vorgenannten wasserlöslichen bzw. schlecht wasserlöslichen ethylenisch ungesättigten Monomeren bilden in der Regel die Hauptmonomeren, die, bezogen auf die Gesamtmenge der zu polymerisierenden Monomeren, einen Anteil von $\geq 90$ Gew.-%, oft $\geq 95$ Gew.-% auf sich vereinen.

Monomere, die üblicherweise die innere Festigkeit der Verfilmungen der erfindungsgemäßen Polymerisate erhöhen, weisen normalerweise wenigstens eine Epoxy-, Hydroxy-, N-Methylol- oder Carbonylgruppe, oder wenigstens zwei nicht konjugierte ethylenisch ungesättigte Doppelbindungen auf. Beispiele hierfür sind N-Alkylolamide von 3 bis 10 C-Atome aufweisenden $\alpha,\beta$-monoethylenisch ungesättigten Carbonsäuren, unter denen das N-Methylolacrylamid und das N-Methylolmethacrylamid ganz besonders bevorzugt sind sowie deren Ester mit 1 bis 4 C-Atomen aufweisenden Alkanolen. Daneben kommen auch zwei Vinylreste aufweisende Monomere, zwei Vinylidenreste aufweisende Monomere sowie zwei Alkenylreste aufweisende Monomere in Betracht. Besonders vorteilhaft sind dabei die Di-Ester zweiwertiger Alkohole mit $\alpha,\beta$-monoethylenisch ungesättigten Monocarbonsäuren unter denen die Acryl- und Methacrylsäure bevorzugt sind. Beispiele für derartige zwei nicht konjugierte ethylenisch ungesättigte Doppelbindungen aufweisende Monomere sind Alkylenglykoldiacrylate und -dimethacrylate, wie Ethylenglykoldiacrylat, 1,2-Propylenglykoldiacrylat, 1,3-Propylenglykoldiacrylat, 1,3-Butylenglykoldiacrylat, 1,4-Butylenglykoldiacrylate und Ethylenglykoldimethacrylat, 1,2-Propylenglykoldimethacrylat, 1,3-Propylenglykoldimethacrylat, 1,3-Butylenglykoldimethacrylat, 1,4-Butylenglykoldimethacrylate sowie Divinylbenzol, Vinylmethacrylat, Vinylacrylat, Allylmethacrylat, Allylacrylat, Diallylmaleat, Diallylfumarat, Methylenbisacrylamid, Cyclopentadienylacrylat oder Triallylcyanurat. In diesem Zusammenhang von besonderer Bedeutung sind auch die Methacrylsäure- und Acrylsäure-$C_1$-$C_8$-Hydroxyalkylester, wie n-Hydroxyethyl-, n-Hydroxypropyl- oder n-Hydroxybutylacrylat und -methacrylat sowie Verbindungen wie Diacetonacrylamid und Acetylacetoxyethylacrylat bzw. -methacrylat. Die vorgenannten Monomeren werden meist in Mengen von bis zu 10 Gew.-%, oft von bis zu 5 Gew.-%, jeweils bezogen auf die Gesamtmenge der zu polymerisierenden Monomeren, einpolymerisiert.

Erfindungswesentlich ist, daß die oligomeren Verbindungen einen Gehalt an ethylenisch ungesättigten Doppelbindungen von wenigstens 50 Mol-% aufweisen. Insbesondere können solche oligomeren Verbindungen eingesetzt

werden, deren Gehalt an ethylenisch ungesättigten Doppelbindungen ≥ 60 Mol-%, ≥ 70 Mol-%, ≥ 80 Mol-% oder ≥ 90 Mol-% ist. Besonders vorteilhaft sind oligomere Verbindungen, deren ethylenisch ungesättigte Doppelbindungen in Form von Vinylidengruppen der allgemeinen Formel

$$>C=CH_2$$

vorliegen. Die analytische Bestimmung der ethylenisch ungesättigten Doppelbindungen ist dem Fachmann geläufig und erfolgt beispielsweise durch NMR-Spektroskopie.

Erfindungsgemäß vorteilhaft sind solche oligomeren Verbindungen, die Säuregruppen enthalten. Besonders vorteilhaft sind oligomere Verbindungen, die zu ≥ 50 Gew.-%, ≥ 60 Gew.-%, ≥ 70 Gew.-%, ≥ 80 Gew.-%, ≥ 90 Gew.-% oder zu 100 Gew.-% und alle Werte dazwischen, aus säuregruppenhaltigen ethylenisch ungesättigten Monomeren in einpolymerisierter Form aufgebaut sind. Als säuregruppenhaltige ethylenisch ungesättigte Monomere kommen insbesondere α,β-monoethylenisch ungesättigte $C_3$- bis $C_5$-Mono- und $C_4$- bis $C_8$-Dicarbonsäuren und deren wasserlösliche Salze, wie z.B. Acrylsäure, Methacrylsäure, Maleinsäure, Fumarsäure, Itaconsäure sowie deren Alkalimetall- und Ammoniumsalze, ferner Vinylsulfonsäure, 2-Acrylamido-2-methylpropansulfonsäure, Styrolsulfonsäure und deren wasserlösliche Salze in Betracht. Als säuregruppenhaltige Monomere sind insbesondere Methacrylsäure und deren wasserlösliche Salze geeignet.

Die bei der Herstellung des Polymerisats eingesetzten oligomeren Verbindungen weisen ein zahlenmittleres Molekulargewicht von 500 bis 50.000 g/mol auf. Vorteilhaft weisen die oligomeren Verbindungen ein zahlenmittleres Molekulargewicht von 1.000 bis 30.000 g/mol, insbesondere 1.500 bis 20.000 g/mol und besonders vorteilhaft 2.000 bis 10.000 g/mol auf. Die oligomeren Verbindungen weisen in der Regel einen Polydispersitätsindex (D), entspechend dem Verhältnis von gewichtsmittlerem Molekulargewicht ($M_w$) und zahlenmittleren Molekulargewicht ($M_n$) [$D = M_w / M_n$] von ≤ 5 auf. Oft ist D ≤ 4, ≤ 3 oder sogar ≤ 2. Die Bestimmung der zahlenmittleren und gewichtsmittleren Molekulargewichte ist dem Fachmann geläufig und erfolgt beispielsweise mittels Gelpermeationschromatographie.

Die Herstellung des Polymerisats erfolgt durch eine radikalisch initiierte Polymerisation von wenigstens einem ethylenisch ungesättigten Monomeren in einem flüssigen Medium in Anwesenheit von > 0 und ≤ 5 Gew.-Teilen, bezogen auf 100 Gew.-Teile der zur Polymerisation eingesetzten ethylenisch ungesättigten Monomeren, wenigstens einer der voran beschriebenen oligomeren Verbindungen.

Die Durchführung von radikalisch initiierten Polymerisationen von ethylenisch ungesättigten Monomeren in einem flüssigen Medium ist vielfach vorbeschrieben und dem Fachmann daher hinreichend bekannt [vgl. hierzu Suspensionspolymerisation in Encyclopedia of Polymer Science and Engineering, Vol. 16, John Wiley & Sons, Inc., Seiten 443 ff. (1989); High Polymers, Vol. X, Polymer Processes, Interscience Publishers, Inc., Seiten 69 ff. (1956); High Polymers, Vol. XXIX, Polymerization Processes, John Wiley & Sons, Inc., Seiten 106 ff. (1977); Ullmanns Encyclopädie der technischen Chemie, 4. Aufl., Bd. 19, VCH, Weinheim, Seiten 125 ff. (1980); Emulsionspolymerisation in Encyclopedia of Polymer Science and Engineering, Vol. 8, John Wiley & Sons, Inc., Seiten 659 ff. (1987); D.C. Blackley, in High Polymer Latices, Vol. 1, Seiten 35 ff. (1966); H. Warson, The Applications of Synthetic Resin Emulsions, Kapitel 5, Seiten 246 ff. (1972); D. Diederich, Chemie in unserer Zeit 24, Seiten 135 bis 142 (1990); Emulsion Polymerisation, Interscience Publishers, New York (1965); DE-A 40 03 422 und Dispersionen synthetischer Hochpolymerer, F. Hölscher, Springer-Verlag, Berlin (1969), Lösungspolymerisation in Encyclopedia of Polymer Science and Engineering, Vol. 15, John Wiley & Sons, Inc., Seiten 402 ff. (1989); High Polymers, Vol. X, Polymer Processes, Interscience Publishers, Inc., Seiten 175 ff. (1956); High Polymers, Vol. XXIX, Polymerization Processes, John Wiley & Sons, Inc., Seiten 198 ff. (1977); Ullmanns Encyclopädie der technischen Chemie, 4. Aufl., Bd. 19, VCH, Weinheim, Seiten 112 ff. (1980) und Substanzpolymerisation in Encyclopedia of Polymer Science and Engineering, Vol. 2, John Wiley & Sons, Inc., Seiten 500 ff. (1985); High Polymers, Vol. X, Polymer Processes, Interscience Publishers, Inc., Seiten 31 ff. (1956); High Polymers, Vol. XXIX, Polymerization Processes, John Wiley & Sons, Inc., Seiten 88 ff. (1977)]. Die Polymerisationsreaktionen erfolgen üblicherweise so, daß man das wenigstens eine ethylenisch ungesättigte Monomere, gegebenenfalls unter Mitverwendung von Dispergiermitteln, im flüssigen Medium homogen oder dispers verteilt und mittels eines radikalischen Polymerisationsinitiators polymerisiert. Von dieser Verfahrensweise unterscheidet sich das Verfahren zur Herstellung des erfindungsgemäß verwendeten Polymerisats lediglich durch ein zusätzliches Beisein von > 0 und ≤ 5 Gew.-Teilen wenigstens einer der voran beschriebenen oligomeren Verbindungen. Häufig erfolgt die Polymerisation in Anwesenheit von 0,02 bis 3 Gew.-Teilen, oft 0,05 bis 2 Gew.-Teilen oder 0,07 bis 1,5 Gew.-Teilen, jeweils bezogen auf 100 Gew.-Teile der zur Polymerisation eingesetzten ethylenisch ungesättigten Monomeren, wenigstens einer solchen oligomeren Verbindung. Dabei kann die Gesamtmenge der oligomeren Verbindung im Polymerisationsgefäß vorgelegt werden. Es ist aber auch möglich, keine oder gegebenenfalls lediglich eine Teilmenge der oligomeren Verbindung vorzulegen und die Gesamtmenge bzw. die verbliebene Restmenge im Verlauf der Polymerisation kontinuierlich oder diskontinuierlich zuzugeben.

Als ethylenisch ungesättigte Monomere zur Herstellung des Polymerisats kommen u.a. insbesondere in einfacher Weise radikalisch polymerisierbare Monomere in Betracht, wie beispielsweise Ethylen, Vinylhalogenide, wie Vinylchlorid oder Vinylidenchlorid, vinylaromatische Monomere, wie Styrol, α-Methylstyrol, o-Chlorstyrol oder Vinyltoluole, Ester aus Vinylalkohol und 1 bis 18 C-Atome aufweisenden Monocarbonsäuren, wie Vinylacetat, Vinylpropionat, Vinyl-n-butyrat, Vinyllaurat und Vinylstearat, Ester aus vorzugsweise 3 bis 6 C-Atome aufweisenden α,β-monoethylenisch ungesättigten Mono- und Dicarbonsäuren, wie insbesondere Acrylsäure, Methacrylsäure, Maleinsäure, Fumarsäure und Itaconsäure, mit im allgemeinen 1 bis 12, vorzugsweise 1 bis 8 und insbesondere 1 bis 4 C-Atome aufweisenden Alkanolen, wie besonders Acrylsäure- und Methacrylsäuremethyl-, -ethyl-, -n-butyl-, -iso-butyl und -2-ethylhexylester, Maleinsäuredimethylester oder Maleinsäure-di-n-butylester, Nitrile α,β-monoethylenisch ungesättigter Carbonsäuren, wie Acrylnitril sowie $C_{4-8}$-konjugierte Diene, wie 1,3-Butadien und Isopren. In aller Regel weisen diese Monomeren in Wasser bei Normalbedingungen (25°C, 1 bar) lediglich eine mäßige bis geringe Löslichkeit auf.

Monomere, die unter den vorgenannten Bedingungen eine erhöhte Wasserlöslichkeit aufweisen, sind beispielsweise α,β-monoethylenisch ungesättigte $C_3$- bis $C_5$-Mono- und $C_4$- bis $C_8$-Dicarbonsäuren, deren wasserlösliche Salze und deren Amide, wie z.B. Acrylsäure, Methacrylsäure, Maleinsäure, Fumarsäure, Itaconsäure sowie deren Alkalimetall- und Ammoniumsalze, Acrylamid und Methacrylamid, ferner Vinylsulfonsäure, 2-Acrylamido-2-methylpropansulfonsäure, Styrolsulfonsäure und deren wasserlösliche Salze sowie N-Vinylpyrrolidon. Die vorgenannten wasserlöslichen bzw. schlecht wasserlöslichen ethylenisch ungesättigten Monomeren bilden in der Regel die Hauptmonomeren, die, bezogen auf die Gesamtmenge der zu polymerisierenden Monomeren, einen Anteil von ≥ 90 Gew.-%, oft ≥ 95 Gew.-% auf sich vereinen.

Monomere, die üblicherweise die innere Festigkeit der Verfilmungen der erfindungsgemäßen Polymerisate erhöhen, weisen normalerweise wenigstens eine Epoxy-, Hydroxy-, N-Methylol- oder Carbonylgruppe, oder wenigstens zwei nicht konjugierte ethylenisch ungesättigte Doppelbindungen auf. Beispiele hierfür sind N-Alkylolamide von 3 bis 10 C-Atome aufweisenden α,β-monoethylenisch ungesättigten Carbonsäuren, unter denen das N-Methylolacrylamid und das N-Methylolmethacrylamid ganz besonders bevorzugt sind sowie deren Ester mit 1 bis 4 C-Atomen aufweisenden Alkanolen. Daneben kommen auch zwei Vinylreste aufweisende Monomere, zwei Vinylidenreste aufweisende Monomere sowie zwei Alkenylreste aufweisende Monomere in Betracht. Besonders vorteil-haft sind dabei die Di-Ester zweiwertiger Alkohole mit α,β-monoethylenisch ungesättigten Monocarbonsäuren unter denen die Acryl- und Methacrylsäure bevorzugt sind. Beispiele für derartige zwei nicht konjugierte ethylenisch ungesättigte Doppelbindungen aufweisende Monomere sind Alkylenglykoldiacrylate und -dimethacrylate, wie Ethylenglykoldiacrylat, 1,2-Propylenglykoldiacrylat, 1,3-Propylenglykoldiacrylat, 1,3-Butylenglykoldiacrylat, 1,4-Butylenglykoldiacrylate und Ethylenglykoldimethacrylat, 1,2-Propylenglykoldimethacrylat, 1,3-Propylenglykoldimethacrylat, 1,3-Butylenglykoldimethacrylat, 1,4-Butylenglykoldimethacrylate sowie Divinylbenzol, Vinylmethacrylat, Vinylacrylat, Allylmethacrylat, Allylacrylat, Diallylmaleat, Diallylfumarat, Methylenbisacrylamid, Cyclopentadienylacrylat oder Triallylcyanurat. In diesem Zusammenhang von besonderer Bedeutung sind auch die Methacrylsäure- und Acrylsäure-$C_1$-$C_8$-Hydroxyalkylester, wie n-Hydroxyethyl-, n-Hydroxypropyl- oder n-Hydroxybutylacrylat und -methacrylat sowie Verbindungen wie Diacetonacrylamid und Acetylacetoxyethylacrylat bzw. -methacrylat. Die vorgenannten Monomeren werden meist in Mengen von bis zu 10 Gew.-%, oft von bis zu 5 Gew.-%, jeweils bezogen auf die Gesamtmenge der zu polymerisierenden Monomeren, einpolymerisiert.

Bei der Herstellung des Polymerisats ist es möglich, die Gesamtmenge des wenigstens einen ethylenisch ungesättigten Monomeren im Polymerisationsgefäß vorzulegen. Es ist aber auch möglich, keine oder gegebenenfalls lediglich eine Teilmenge des wenigstens einen ethylenisch ungesättigten Monomeren im Polymerisationsgefäß vorzulegen und die Gesamtmenge bzw. die verbleibene Restmenge im Verlauf der Polymerisation kontinuierlich oder diskontinuierlich zuzugeben.

Das flüssige Medium kann Lösungsmittel oder Dispergiermittel sein. Als Lösungsmittel für eine Lösungspolymerisation eignen sich Wasser, aliphatische und aromatische Kohlenwasserstoffe, wie n-Hexan, Cyclohexan, Benzol, Toluol, Ethylbenzol, Diethylbenzol, Isopropylbenzol und Diisopropylbenzol, Alkohole, wie Methanol, Ethanol, n-Propanol, 2-Propanol, n-Butanol und 2-Butanol, Ketone, wie Aceton und Butanon-2, aliphatische Ester, wie Ethylacetat, halogenierte Kohlenwasserstoffe, wie Chlorbenzol, Dichlormethan, Chloroform und Tetrachlorkohlenstoff, aber auch andere organische Lösungsmittel oder geeignete Mischungen der vorgenannten flüssigen Medien. Als Dispergiermedium für eine Emulsions- und Suspensionspolymerisation eignet sich Wasser und für die inverse Emulsionspolymerisation aliphatische und aromatische Kohlenwasserstoffe, wie n-Hexan, Cyclohexan, Benzol, Toluol, Ethylbenzol, Diethylbenzol, Isopropylbenzol und Diisopropylbenzol. Es ist aber auch möglich, daß die zu polymerisierenden Monomeren selbst als Lösungsmittel fungieren. Dies ist bei der Substanzpolymerisation der Fall.

Dabei kann die Gesamtmenge des flüssigen Mediums im Polymerisationsgefäß vorgelegt werden. Es ist aber auch möglich, keine oder gegebenenfalls lediglich eine Teilmenge des flüssigen Mediums im Polymerisationsgefäß vorzulegen und die Gesamtmenge bzw. die verbleibene Restmenge im Verlauf der Polymerisation kontinuierlich oder diskontinuierlich zuzugeben.

Der Anteil der Monomeren am zu polymerisierenden System, bestehend aus Monomeren und flüssigem Medium, kann 0,1 bis 100 Gew.-%, im Normalfall ≥ 5 bis 80 Gew.-%, oft 20 bis 70 Gew.-% und häufig 40 bis 60 Gew.-%

betragen.

Als radikalische Polymerisationsinitiatoren zur Herstellung der Polymerisate kommen alle diejenigen in Betracht, die in der Lage sind, im flüssigen Medium eine radikalische Polymerisation auszulösen. Es kann sich dabei prinzipiell sowohl um Peroxide als auch um Azoverbindungen handeln. Selbstverständlich kommen auch Redoxinitiatorsysteme in Betracht. Um die radikalische Polymerisation aus Sicht der gewünschten Eigenschaften sowie bezüglich einer hohen Wirtschaftlichkeit besonders effizient zu führen, werden in der Regel in der Emulsionspolymerisation sogenannte wasserlösliche Polymerisationsinitiatoren, in der Suspensionspolymerisation sogenannte wasserlösliche und sogenannte öllösliche Polymerisationsinitiatoren und in der Lösungs- sowie Substanzpolymerisation sogenannten öllösliche Polymerisationsinitiatoren bevorzugt. Vorzugsweise beträgt die Menge des eingesetzten radikalischen Polymerisationsinitiators, bezogen auf die Gesamtmenge der zu polymerisierenden Monomeren, 0,1 bis 5 Gew.-%.

Die Art und Weise, in der der radikalilsche Polymerisationsinitiator im Verlauf des Polymerisationsverfahrens dem Polymerisationsgefäß zugeführt wird, ist eher von untergeordneter Bedeutung. Der radikalische Polymerisationsinitiator kann sowohl vollständig im Polymerisationsgefäß vorgelegt, als auch nach Maßgabe seines Verbrauchs im Verlauf der erfindungsgemäßen radikalischen Polymerisationsverfahrens kontinuierlich oder stufenweise zugesetzt werden. Im einzelnen hängt dies in an sich dem Fachmann bekannter Weise u.a. von der chemischen Natur des wenigstens einen Polymerisationsinitiators, dem zu polymerisierenden Mönomerensystem, dem flüssigen Medium und der Polymerisationstemperatur ab.

Zur Herstellung des Polymerisats kommt der gesamte Bereich von 0 bis 200°C als Reaktionstemperatur in Betracht, Temperaturen von 70 bis 150°C, vorzugsweise 80 bis 120°C und besonders bevorzugt 85 bis 110°C werden jedoch bevorzugt angewendet. Das Verfahren zur Herstellung des Polymerisats kann bei einem Druck kleiner, gleich oder größer 1 bar (absolut) durchgeführt werden, so daß die Polymerisationstemperatur die Siedetemperatur des flüssigen Mediums übersteigen und bis zu 200°C betragen kann. In der Regel wird bei Verwendung eines flüssigen Mediums, das bei 1 bar (absolut) eine Siedetemperatur von ≤ 100 °C aufweist oder beim Einsatz leichtflüchtiger Monomerer wie Ethylen, Butadien oder Vinylchlorid unter erhöhtem Druck polymerisiert. Dabei kann der Druck 1,2, 1,5, 2, 5, 10, 15 bar oder noch höhere Werte einnehmen. Wird das erfindungsgemäße Verfahren im Unterdruck durchgeführt, werden Drücke von 950 mbar, häufig von 900 mbar und oft 850 mbar (absolut) eingestellt. Vorteilhaft wird die Polymerisatherstellung unter Inertgasatmosphäre, wie beispielsweise unter Stickstoff oder Argon durchgeführt.

Weiterhin können bei der Polymerisation auch Regler eingesetzt werden, durch die die Molmasse des Polymerisats verringert wird. Geeignet sind beispielsweise Verbindungen mit einer Thiolgruppe, wie tert.-Butylmercaptan, Thioglykolsäure, Mercaptoethanol, Mercaptopropyltrimethoxysilan oder tert.-Dodecylmercaptan. Der Anteil dieser Regler kann insbesondere bis zu 0,3 Gew.-%, bevorzugt 0,02 bis 0,2 Gew.-%, jeweils bezogen auf die Gesamtmenge der zur Polymerisation eingesetzten ethylenisch ungesättigten Monomeren, betragen.

Im Rahmen des Polymerisationsverfahrens können in der Emulsions- und Suspensionspolymerisation auch Dispergiermittel mitverwendet werden, die sowohl die Polymerisatteilchen als auch die Monomerentröpfchen im flüssigen Medium dispers verteilt halten. Als solche kommen prinzipiell sowohl Schutzkolloide als auch Emulgatoren in Betracht.

Geeignete Schutzkolloide sind beispielsweise Polyvinylalkohole, Cellulosederivate oder Vinylpyrrolidon enthaltende Copolymerisate. Eine ausführliche Beschreibung weiterer geeigneter Schutzkolloide findet sich in Houben-Weyl, Methoden der organischen Chemie, Band XIV/1, Makromolekulare Stoffe, Georg-Thieme-Verlag, Stuttgart, 1961, Seiten 411 bis 420.

Als Dispergiermittel können auch Emulgatoren eingesetzt werden, deren relative Molekulargewichte im Unterschied zu den Schutzkolloiden üblicherweise unter 1000 g/mol liegen. Sie können sowohl anionischer, kationischer oder nichtionischer Natur sein. Selbstverständlich müssen im Falle der Verwendung von Gemischen grenzflächenaktiver Substanzen die Einzelkomponenten miteinander verträglich sein, was im Zweifelsfall an Hand weniger Vorversuche überprüft werden kann. Im allgemeinen sind anionische Emulgatoren untereinander und mit nichtionischen Emulgatoren verträglich. Desgleichen gilt auch für kationische Emulgatoren, während anionische und kationische Emulgatoren meistens nicht miteinander verträglich sind. Gebräuchliche Emulgatoren sind z.B. ethoxilierte Mono-, Di- und Tri-Alkylphenole (EO-Grad: 3 bis 50, Alkylrest: $C_4$ bis $C_{12}$), ethoxilierte Fettalkohole (EO-Grad: 3 bis 50; Alkylrest: $C_8$ bis $C_{36}$) sowie Alkalimetall- und Ammoniumsalze von Alkylsulfaten (Alkylrest: $C_8$ bis $C_{12}$), von Schwefelsäurehalbestern ethoxylierter Alkanole (EO-Grad: 4 bis 30, Alkylrest: $C_{12}$ bis $C_{18}$) und ethoxilierter Alkylphenole (EO-Grad: 3 bis 50, Alkylrest: $C_4$ bis $C_{12}$), von Alkylsulfonsäuren (Alkylrest: $C_{12}$ bis $C_{18}$) und von Alkylarylsulfonsäuren (Alkylrest: $C_9$ bis $C_{18}$). Weitere geeignete Emulgatoren finden sich in Houben-Weyl, Methoden der organischen Chemie, Band XIV/1, Makromolekulare Stoffe, Georg-Thieme-Verlag, Stuttgart, 1961, Seiten 192 bis 208.

Als grenzflächenaktive Substanzen haben sich ferner Verbindungen der allgemeinen Formel I

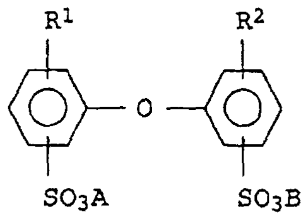

(I),

worin $R^1$ und $R^2$ H-Atome oder $C_4$- bis $C_{24}$-Alkyl bedeuten und nicht gleichzeitig H-Atome sind, und A und B Alkalimetallionen und/oder Ammoniumionen sein können, erwiesen. In der allgemeinen Formel I bedeuten $R^1$ und $R^2$ bevorzugt lineare oder verzweigte Alkylreste mit 6 bis 18 C-Atomen, insbesondere mit 6, 12 und 16 C-Atomen oder -H, wobei $R^1$ und $R^2$ nicht beide gleichzeitig H-Atome sind. A und B sind bevorzugt Natrium, Kalium oder Ammonium, wobei Natrium besonders bevorzugt ist. Besonders vorteilhaft sind Verbindungen I, in denen A und B Natrium, $R^1$ ein verzweigter Alkylrest mit 12 C-Atomen und $R^2$ ein H-Atom oder $R^1$ ist. Häufig werden technische Gemische verwendet, die einen Anteil von 50 bis 90 Gew.-% des monoalkylierten Produktes aufweisen, beispielsweise Dowfax® 2A1 (Marke der Dow Chemical Company). Die Verbindungen I sind allgemein bekannt, z.B. aus US-A 4269749, und im Handel erhältlich.

Selbstverständlich können auch Gemische aus Emulgatoren und Schutzkolloiden als Dispergiermittel verwendet werden.

Wird in einem Emulsions- oder Suspensionspolymerisationsverfahren zur Herstellung des Polymerisats ein Dispergiermittel eingesetzt, beträgt die Menge in der Regel zwischen 0,1 bis 3 Gew.-%, bezogen auf die radikalisch zu polymerisierenden Monomeren.

Dabei ist es möglich, die Gesamtmenge des Dispergiermittels im Polymerisationsgefäß vorzulegen. Es ist aber auch möglich, keine oder gegebenenfalls lediglich eine Teilmenge des Dispergiermittels im Polymerisationsgefäß vorzulegen und die Gesamtmenge bzw. die verbleibene Restmenge im Verlauf der Polymerisation kontinuierlich oder diskontinuierlich zuzugeben.

Das die Basis des Haftklebstoffes bildende Polymerisat wird bevorzugt durch radikalisch initiierte wässrige Emulsionspolymerisation hergestellt.

Zur Herstellung der das Polymerisat bildende Homo- oder Copolymerisate durch wässrige Emulsionspolymerisation sind Ester aus Vinylalkohol und 1 bis 18 C-Atome aufweisenden Monocarbonsäuren, wie Vinylacetat, Vinylpropionat, Vinyl-n-butyrat, Vinyllaurat und Vinylstearat, Ester aus vorzugsweise 3 bis 6 C-Atome aufweisenden $\alpha,\beta$-monoethylenisch ungesättigten Mono- und Dicarbonsäuren, wie insbesondere Acrylsäure, Methacrylsäure, Maleinsäure, Fumarsäure und Itaconsäure, mit im allgemeinen 1 bis 12, vorzugsweise 1 bis 8 und insbesondere 1 bis 4 C-Atome aufweisenden Alkanolen, wie besonders Acrylsäure- und Methacrylsäuremethyl-, -ethyl-, -n-butyl-, -iso-butyl und -2-ethylhexylester, Maleinsäuredimethylester oder Maleinsäure-di-n-butylester, Nitrile $\alpha,\beta$-monoethylenisch ungesättigter Carbonsäuren, wie Acrylnitril gut geeignet. Insbesondere sind Ester aus vorzugsweise 3 bis 6 C-Atome aufweisenden $\alpha,\beta$-monoethylenisch ungesättigten Mono- und Dicarbonsäuren, wie insbesondere Acrylsäure, Methacrylsäure, Maleinsäure, Fumarsäure und Itaconsäure, mit im allgemeinen 1 bis 12, vorzugsweise 1 bis 8 und insbesondere 1 bis 4 C-Atome aufweisenden Alkanolen, wie besonders Acrylsäure- und Methacrylsäuremethyl-, -ethyl-, -n-butyl-, -iso-butyl und -2-ethylhexylester, Maleinsäuredimethylester oder Maleinsäure-di-n-butylester zur Herstellung der das Polymerisat bildende Homo- oder Copolymerisate geeignet. Bevorzugt werden zur Herstellung des Polymerisats Alkylacrylate und/oder Alkylmethacrylate, wie n-Butylacrylat, Methylmethacrylat und/oder 2-Ethylhexylacrylat als Hauptmonomere eingesetzt. Insbesondere werden zur Herstellung des Polymerisats Monomerenmischungen mit folgender Zusammensetzung eingesetzt:

| | |
|---|---|
| 50 bis 60 Gew.-% | n-Butylacrylat, |
| 20 bis 30 Gew.-% | 2-Ethylhexylacrylat, |
| 10 bis 20 Gew.-% | Methylmethacrylat und |
| 0 bis 5 Gew.-% | Acryl- oder Methacrylsäure, |

wobei die Angaben in Gew.-% auf die Gesamtmenge der zur Polymerisation eingesetzten Monomeren bezogen sind.

Erfindungswesentlich ist, daß das Polymerisat eine Glasübergangstemperatur $T_g \leq 10°C$ aufweist. Häufig werden Polymerisate eingesetzt, deren $T_g$-Werte $\leq 0°C$, $\leq -10°C$, $\leq -20°C$, $\leq -30°C$, $\leq -40°C$ oder $\leq -50°C$ sind. Es können aber auch Polymerisate eingesetzt werden, deren Glasübergangstemperaturen zwischen -60 und $\leq 10°C$, zwischen -50 und -10°C oder zwischen -40 bis -20°C liegen. Unter Glasübergangstemperatur wird hier die midpoint

temperature nach ASTM D 3418-82 verstanden, ermittelt durch Differentialthermoanalyse (DSC) [vgl. auch Ullmann's Encyclopedia of Industrial Chemistry, Seite 169, VCH, Weinheim, (1992) und Zosel in Farbe und Lack, 82, Seiten 125 bis 134, 1976].

Nach Fox (T.G. Fox, Bull. Am. Phys. Soc. 1956 [Ser. II] 1, Seite 123 und gemäß Ullmann's Encyclopädie der technischen Chemie, Bd. 19, Seite 18, 4. Auflage, VCH, Weinheim, (1980)) gilt für die Glasübergangstemperatur von höchstens schwach vernetzten Mischpolymerisaten in guter Näherung:

$$1/T_g = x^1/T_g^{\ 1} + x^2/T_g^{\ 2} + .... x^n/T_g^{\ n},$$

wobei $x^1$, $x^2$, .... $x^n$ die Massenbrüche der Monomeren 1, 2, .... n und $T_g^1$, $T_g^2$, .... $T_g^n$ die Glasübergangstemperaturen der jeweils nur aus einem der Monomeren 1, 2, .... n aufgebauten Polymerisaten in Grad Kelvin bedeuten. Die Glasübergangstemperaturen dieser Homopolymerisate der meisten ethylenisch ungesättigten Monomere sind bekannt (bzw. können in einfacher an sich bekannter Weise experimentell ermittelt werden) und beispielsweise in J. Brandrup, E.H. Immergut, Polymer Handbook 1st Ed. J. Wiley, New York, 1966, 2nd Ed. J. Wiley, New York, 1975 und 3rd Ed. J. Wiley, New York, 1989, sowie in Ullmann's Encyclopedia of Industrial Chemistry, Vol. A 21, Seite 169, VCH, Weinheim, (1992), aufgeführt.

Die Polymerisate werden vorzugsweise in Form einer wässrigen Dispersion verwendet. Von Bedeutung ist, daß diese wässrigen Dispersionen eine erhöhte Stabilität aufweisen. D.h wässrige Dispersionen von Polymerisaten, die in Anwesenheit einer der vorgenannten oligomeren Verbindungen aus Monomeren gebildet wurden, sind deutlich stabiler als solche, deren Polymerisate in Abwesenheit einer oligomeren Verbindung aus den entsprechenden Monomeren hergestellt wurden. Dies drückt sich beispielsweise in einer erhöhten Scherstabilität und/oder in einer geringeren Menge an erforderlichem Dispergiermittel aus.

Bei der Verwendung als Haftklebstoff wird den Polymerisaten bzw. der wässrigen Dispersion des Polymerisats vorzugsweise ein Tackifier, d.h. ein klebrigmachendes Harz zugesetzt. Tackifier sind beispielsweise aus Adäsive Age, Juli 1987, Seiten 19 bis 23 oder Polym. Mater. Sci. Eng. 61 (1989), Seiten 588 bis 592, bekannt.

Tackifier sind z.B. Naturharze, wie Kolophoniumharze und deren durch Disproportionierung oder Isomerisierung, Polymerisation, Dimerisation oder Hydrierung entstehenden Derivate. Diese können in ihrer Salzform (mit z.B. ein- oder mehrwertigen Gegenionen [Kationen]) oder bevorzugt in ihrer veresterten Form vorliegen.

Alkohole, die zur Veresterung verwendet werden, können ein- oder mehrwertig sein. Beispiele sind Methanol, Ethandiol, Diethylenglykol, Triethylenglykol, 1,2,3-Propantriol (Glyzerin) oder Pentaerythrit.

Desweiteren finden auch Kohlenwasserstoffharze, z.B. Cumaron-Inden-Harze, Polyterpen-Harze, Kohlenwasserstoffharze auf Basis ungesättigter CH-Verbindungen, wie Butadien, Penten, Methylbuten, Isopren, Piperylen, Divinylmethan, Pentadien, Cyclopenten, Cyclopentadien, Cyclohexadien, Styrol, $\alpha$-Methylstyrol oder Vinyltoluole Verwendung.

Als Tackifier werden zunehmend auch Polyacrylate, welche ein niedriges Molekulargewicht aufweisen, verwendet. Vorzugsweise haben diese Polyacrylate ein gewichtsmittleres Molekulargewicht unter 30.000 g/mol. Die Polyacrylate bestehen bevorzugt zu mindestens 60, insbesondere mindestens 80 Gew.-% aus $C_1$-$C_8$-Alkylacrylaten oder -methacrylaten.

Bevorzugte Tackifier sind natürliche oder chemisch modifizierte Kolophoniumharze. Kolophoniumharze bestehen zum überwiegenden Teil aus Abietinsäure oder Abietinsäurederivaten.

Die Tackifier können in einfacher Weise den erfindungsgemäß verwendeten Polymerisaten, bevorzugt den wässrigen Dispersionen dieser Polymerisate zugesetzt werden. Vorzugsweise liegen die Tackifier dabei selbst in Form einer wässrigen Dispersion vor.

Die Menge der Tackifier beträgt vorzugsweise 5 bis 100 Gew.-%, besonders 10 bis 50 Gew.-%, jeweils bezogen auf die Gesamtmenge des Polymerisats (fest/fest).

Neben Tackifiern können selbstverständlich auch noch andere Additive, beispielsweise Verdickungsmittel, Entschäumer, Weichmacher, Pigmente, Netzmittel oder Füllstoffe bei der Formulierung von Haftklebstoffen Verwendung finden.

Die Polymerisate oder deren wässrigen Dispersionen können durch übliche Methoden, beispielsweise durch Rollen, Rakeln, Streichen etc. auf Substrate, wie beispielsweise Papier oder Polymerbänder und -folien, bevorzugt bestehend aus Polyethylen, Polypropylen, das biaxial oder monoaxial verstreckt sein kann, Polyethylenterephthalat, Polyvinylchlorid, Polystyrol, Polyamid oder Metalloberflächen aufgebracht werden. Das Wasser kann in einfacher Weise durch Trocknung bei 50 bis 150°C entfernt werden. Zur späteren Verwendung kann die mit Haftklebstoff beschichtete Seite der Substrate, beispielsweise der Etiketten oder Bänder, mit einem Releasepapier, beispielsweise mit einem silikonisierten Papier, abgedeckt werden.

Die erfindungsgemäßen Haftklebstoffe zeigen ein ausgewogenes Verhältnis zwischen guter Haftung und hoher Kohäsion.

Beispiele

1. Herstellung eines Kobaltoximborfluorid-Komplexes

Die Herstellung des Kobaltoximborfluorid-Komplexes erfolgte nach der von Bacac und Espenson in J. Am. Chem. Soc. 1984 (106) Seiten 5197 bis 5202 beschriebenen Verfahrensweise.

Hierzu wurden 2,00 g Kobalt-II-acetat-Tetrahydrat , 1,90 g Dimethylglyoxim, 10 ml Bortrifluorid-Diethyletherat und 150 ml Diethylether in einem 250 ml Zweihalskolben unter Stickstoffatmosphäre vorgelegt und bei 20°C 6 Stunden gerührt. Anschließend filtrierte man den ausgefallen Feststoff unter Stickstoff ab und wusch ihn mit 20 ml entionisiertem Wasser, welches eine Temperatur von 1°C aufwies. Der Feststoff wurde im Vakuum getrocknet und anschließend spektroskopisch untersucht. Das Vorliegen einer kobaltorganischen Verbindung mit folgender Struktur II wurde bestätigt:

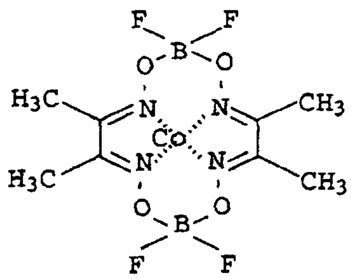 x $2H_2O$ (II)

2. Herstellung einer oligomeren Polymethacrylsäure

In einem Dreihalskolben wurden unter Stickstoff 17,5 mg des unter Punkt 1. beschriebenen Kobaltoximborfluorid-Komplexes II, 0,75 g VA 044®, [Marke der Firma WAKO, 2,2'-Azobis(N,N'-dimethylenisobutyramidine)dihydrochlorid] in 450 g entionisiertem Wasser vorgelegt und die erhaltene Lösung auf 55°C aufgeheizt. Bei dieser Temperatur dosierte man der gerührten Lösung innerhalb 1 Stunde eine Lösung, hergestellt aus 190 g Methacrylsäure und 9 mg des Kobaltkomplexes II, zu. Anschließend wurde die Lösung noch 1,5 Stunden bei 55°C gerührt und dann auf Raumtemperatur abgekühlt. Die Lösung wies einen Feststoffgehalt von 26,9 Gew.-%, bezogen auf das Gesamtgewicht der Lösung, auf. Gelpermeationschromatographisch wurde das zahlenmittlere Molekulargewicht $M_n$ der oligomeren Verbindung zu 3.000 g/mol und der Polydispersitätsindex D zu 2,2 bestimmt (Säulen: 1 x TSK PW-XL 5000, 1 x Waters Ultrahydrogel 1000 und 2 x Waters Hydrogel 500, Länge je 30 cm, Durchmesser je 7,8 mm, Temperatur: 35°C, Durchflußgeschwindigkeit 0,5 ml/min, Elutionsmittel: entionisiertes Wasser mit 0,08 m TRIS-Puffer pH = 7,0, 0,15 m NaCl und 0,01 m $NaN_3$ ). NMR-spektroskopisch konnte ein Gehalt an ethylenisch ungesättigten Doppelbindungen von > 90 Mol-% bestimmt werden.

3. Herstellung eines Polymerisats durch radikalisch initiierte wässrige Emulsionspolymerisation

In einem 1 l-Vierhalskolben, ausgerüstet mit einem Anker-Rührer, Rückflußkühler und zwei Dosiereinrichtungen wurden unter Stickstoffatmosphäre 150 g entionisiertes Wasser und 1,7 g einer wässrigen Polystyrolsaat (Feststoffgehalt 33 Gew.-%, zahlenmittlerer Teilchendurchmesser 32 nm) vorgelegt und unter Rühren auf 95°C aufgeheizt.

Zulauf 1:

| | |
|---|---|
| 207,1 g | entionisiertes Wasser |
| 12,44 g | einer 45 gew.-%igen wässrigen Lösung von Dowfax® 2A1 (Marke der Dow Chemical Company) |
| 3,73 g | einer 30 gew.-%igen wässrigen Lösung von Disponil® FES 77 (Marke der Henkel KGaA) |
| 0,28 g | tert.-Dodecylmercaptan |
| 5,6 g | Acrylsäure |
| 315,8 g | n-Butylacrylat |
| 154,0 g | 2-Ethylhexylacrylat |
| 84,0 g | Methylmethacrylat |
| 2,08 g | der unter Punkt 2. hergestellten Lösung von oligomerer Polymethacrylsäure |

Zulauf 2:

40,0 g einer 7 gew.-%igen wässrigen Lösung von Natriumperoxodisulfat

Zu der bei 95°C gerührten Vorlage gab man 4,0 g von Zulauf 2. Nach 5 Minuten wurden der bei 95°C gerührten Vorlage Zulauf 1 und der Rest von Zulauf 2 zeitgleich beginnend über die beiden Dosiereinheiten während 3 Stunden kontinuierlich zudosiert. Anschließend wurde die entstandene wässrige Polymerisatdispersion noch 30 Minuten bei Reaktionstemperatur gerührt. Danach wurden dem Reaktionsgemisch bei einer Reaktionstemperatur von 95°C zeitgleich beginnend, 16,8 g einer 10 gew.-%igen wässrigen Lösung von tert.-Butylhydroperoxid und 14,9 g einer 12 gew.-%igen wässrigen Lösung von Acetonbisulfit (= Additionsprodukt von Natriumhydrogensulfit an Aceton) über die beiden Dosiereinheiten während 30 Minuten kontinuierlich zudosiert. Nach Abschluß der Nachpolymerisation gab man der gerührten wässrigen Polymerisatdispersion 19,6 g einer 10 gew.-%igen wässrigen Lösung von Natriumhydroxid zu und kühlte auf Raumtemperatur ab. Die wässrige Dispersion wies einen Feststoffgehalt von 56 Gew.-%, bezogen auf das Gesamtgewicht der wässrigen Dispersion auf.

Der Feststoffgehalt wurde generell bestimmt, indem eine aliquote Probe unter einem IR-Strahler mit einer Leistung von 140 Watt bei 115°C bis zur Gewichtskonstanz getrocknet wurde.

Die Glasübergangstemperaturen wurden generell mit einem Toledo-Gerät der Fa. Mettler nach ASTM D 3418-82 bestimmt. Im vorstehenden Beispiel betrug sie -32,5°C.

4. Herstellung eines Polymerisats durch radikalisch initiierte wässrige Emulsionspolymerisation

In einem 1 l-Vierhalskolben, ausgerüstet mit einem Anker-Rührer, Rückflußkühler und zwei Dosiereinrichtungen wurden unter Stickstoffatmosphäre 150 g entionisiertes Wasser und 1,7 g einer wässrigen Polystyrolsaat (Feststoffgehalt 33 Gew.-%, zahlenmittlerer Teilchendurchmesser 32 nm) vorgelegt und unter Rühren auf 95°C aufgeheizt.

Zulauf 1:

| | |
|---|---|
| 206,1 g | entionisiertes Wasser |
| 12,44 g | einer 45 gew.-%igen wässrigen Lösung von Dowfax® 2A1 |
| 3,73 g | einer 30 gew.-%igen wässrigen Lösung von Disponil® FES 77 |
| 0,28 g | tert.-Dodecylmercaptan |
| 5,6 g | Acrylsäure |
| 315,8 g | n-Butylacrylat |
| 154,0 g | 2-Ethylhexylacrylat |
| 84,0 g | Methylmethacrylat |
| 4,16 g | der unter Punkt 2. hergestellten Lösung von oligomerer Polymethacrylsäure |

Zulauf 2:

40,0 g einer 7 gew.-%igen wässrigen Lösung von Natriumperoxodisulfat

Zu der bei 95°C gerührten Vorlage gab man 4,0 g von Zulauf 2. Nach 5 Minuten wurden der bei 95°C gerührten Vorlage Zulauf 1 und der Rest von Zulauf 2 zeitgleich beginnend über die beiden Dosiereinheiten während 3 Stunden kontinuierlich zudosiert. Anschließend wurde die entstandene wässrige Polymerisatdispersion noch 30 Minuten bei Reaktionstemperatur gerührt. Danach wurden dem Reaktionsgemisch bei einer Reaktionstemperatur von 95°C zeitgleich beginnend, 16,8 g einer 10 gew.-%igen wässrigen Lösung von tert.-Butylhydroperoxid und 14,9 g einer 12 gew.-%igen wässrigen Lösung von Acetonbisulfit über die beiden Dosiereinheiten während 30 Minuten kontinuierlich zudosiert. Nach Abschluß der Nachpolymerisation gab man der gerührten wässrigen Polymerisatdispersion 19,6 g einer 10 gew.-%igen wässrigen Lösung von Natriumhydroxid zu und kühlte auf Raumtemperatur ab. Die wässrige Dispersion wies einen Feststoffgehalt von 56 Gew.-%, bezogen auf das Gesamtgewicht der wässrigen Dispersion auf. Die Glasübergangstempertur des Polymerisats betrug -32,5°C.

5. Herstellung eines Polymerisats durch radikalisch initiierte wässrige Emulsionspolymerisation

In einem 1 l-Vierhalskolben, ausgerüstet mit einem Anker-Rührer, Rückflußkühler und zwei Dosiereinrichtungen wurden unter Stickstoffatmosphäre 150 g entionisiertes Wasser und 1,7 g einer wässrigen Polystyrolsaat (Feststoffgehalt 33 Gew.-%, zahlenmittlerer Teilchendurchmesser 32 nm) vorgelegt und unter Rühren auf 95°C aufgeheizt.

Zulauf 1:

| | |
|---|---|
| 204,2 g | entionisiertes Wasser |
| 12,44 g | einer 45 gew.-%igen wässrigen Lösung von Dowfax® 2A1 |
| 3,73 g | einer 30 gew.-%igen wässrigen Lösung von Disponil® FES 77 |
| 0,28 g | tert.-Dodecylmercaptan |
| 5,6 g | Acrylsäure |
| 314,7 g | n-Butylacrylat |
| 154,0 g | 2-Ethylhexylacrylat |
| 84,0 g | Methylmethacrylat |
| 6,25 g | der unter Punkt 2. hergestellten Lösung von oligomerer Polymethacrylsäure |

Zulauf 2:

| | |
|---|---|
| 40,0 g | einer 7 gew.-%igen wässrigen Lösung von Natriumperoxodisulfat |

Zu der bei 95°C gerührten Vorlage gab man 4,0 g von Zulauf 2. Nach 5 Minuten wurden der bei 95°C gerührten Vorlage Zulauf 1 und der Rest von Zulauf 2 zeitgleich beginnend über die beiden Dosiereinheiten während 3 Stunden kontinuierlich zudosiert. Anschließend wurde die entstandene wässrige Polymerisatdispersion noch 30 Minuten bei Reaktionstemperatur gerührt. Danach wurden dem Reaktionsgemisch bei einer Reaktionstemperatur von 95°C zeitgleich beginnend, 16,8 g einer 10 gew.-%igen wässrigen Lösung von tert.-Butylhydroperoxid und 14,9 g einer 12 gew.-%igen wässrigen Lösung von Acetonbisulfit über die beiden Dosiereinheiten während 30 Minuten kontinuierlich zudosiert. Nach Abschluß der Nachpolymerisation gab man der gerührten wässrigen Polymerisatdispersion 19,6 g einer 10 gew.-%igen wässrigen Lösung von Natriumhydroxid zu und kühlte auf Raumtemperatur ab. Die wässrige Dispersion wies einen Feststoffgehalt von 56 Gew.-%, bezogen auf das Gesamtgewicht der wässrigen Dispersion auf. Die Glasübergangstemperatur des Polymerisats betrug -32,0°C.

6. Vergleichsbeispiel

Beispiel 3 wurde wiederholt mit der Ausnahme, daß man keine oligomere Polymethacrylsäure eingesetzte. Es wurde eine wässrige Polymerisatdispersion mit einem Feststoffgehalt von 56 Gew.-% erhalten. Die Glasübergangstemperatur des Polymerisats betrug -33°C.

7. Anwendungstechnische Untersuchungen

Die Polymerisate der in den Beispielen 3 bis 6 hergestellten wässrigen Polymerisatdispersionen wurden anwendungstechnisch auf deren Haftklebstoffeigenschaften untersucht. Dabei wurde wie folgt vorgegangen:

a) Herstellung der Prüfstreifen

Die zu prüfende wässrige Polymerisatdispersion wurde ohne Zusatz von Tackifiern untersucht. Dazu wurde die wässrige Polymerisatdispersion mit einem Rakel in dünner Schicht auf eine handelsübliche Polyesterfolie (Hostaphanfolie RN 36) aufgetragen und 3 Minuten im Trockenschrank bei 90°C getrocknet. Die Spalthöhe des Rakel wurde dabei so gewählt, daß sich für das getrocknete Polymerisat (Haftklebstoff) eine Auftragsmenge von 29 bis 31 g/m$^2$ ergab. Auf das getrocknete Polymerisat legte man silikonisiertes Papier auf und rollte es mit einem Handroller fest an. Das so hergestellte Folienlaminat wurde in 25 cm lange und 2,5 cm breite Streifen geschnitten. Diese Streifen lagerte man vor der Prüfung mindestens 24 Stunden bei 23°C und 50 % relative Luftfeuchtigkeit.

b) Prüfung der Scherfestigkeit (in Anlehnung an FINAT FTM 7)

Nach Abziehen des silikonisierten Papiers verklebte man den jeweiligen Prüfstreifen so auf den Rand eines Prüfblechs aus Edelstahl, daß eine Verklebungsfläche von 1,56 cm$^2$ resultierte. 10 Minuten nach dem Verkleben wurde dann am überstehenden Ende der Folie ein 500 g-Gewicht befestigt und das Prüfblech senkrecht in einem Raum mit einer Temperatur von konstant 23°C und einer relativen Luftfeuchtigkeit von 50 % aufgehängt. Die Zeit bis zum Reißen der Verklebung unter Einfluss des Gewichts ist ein Maß für die Scherfestigkeit, welche wiederum ein Maß für die Kohäsion darstellt. Diese ist umso größer, je länger die Zeitperiode bis zum Reißen der Verklebung ist. Pro Polymerisat wurden drei unabhängige Bestimmungen durchgeführt. Die in Tabelle 1 angegebenen Werte stellen Mittelwerte aus diesen drei Bestimmungen dar.

c) Prüfung der Schälfestigkeit (in Anlehnung an FINAT FTM 1)

Nach dem Abziehen des silikonisierten Papiers klebte man bei 23°C und 50% relative Luftfeuchtigkeit einen Prüfstreifen auf ein Edelstahlprüfblech.

Nach Ablauf einer vorgegebenen Kontaktzeit von 1 Minute bzw. 24 Stunden wurde der Streifen mit Hilfe einer Zugprüfmaschine in einem Winkel von 180°C mit einer Geschwindigkeit von 300 mm pro Minute vom Prüfblech abgezogen. Die hierfür erforderliche Kraft ist ein Maß für die Adhäsion. Sie wird als Schälfestigkeit bezeichnet und in Newton pro 2,5 cm (N/2,5 cm) angegeben. Die Adhäsion ist umso höher, je höher der Wert für die Schälfestigkeit nach der angegebenen Zeit ist. Pro Polymerisat wurden drei unabhängige Bestimmungen durchgeführt. Die in Tabelle 1 angegebenen Werte stellen Mittelwerte aus diesen drei Bestimmungen dar.

Tabelle 1

| Zusammenfassende Darstellung der Scherfestigkeit und der Schälfestigkeit der aus den wässrigen Polymerisatdispersionen der Beispiele 3 bis 6 erhaltenen Polymerisate | | | |
|---|---|---|---|
| Polymerisat aus Beispiel | Scherfestigkeit in Minuten | Schälfestigkeit in N/2,5 cm | |
| | | nach 1 Minute | nach 24 Stunden |
| 3 | 2195 | 6,9 | 10,6 |
| 4 | 3666 | 6,2 | 10,8 |
| 5 | 2306 | 5,7 | 10,7 |
| 6 (Vergleich) | 432 | 6,8 | 10,9 |

Wie aus Tabelle 1 klar ersichtlich ist, weisen die erfindungsgemäßen Haftklebstoffe, im Vergleich zu einem Haftklebstoff, bei dessen Herstellung keine oligomere Verbindung eingesetzt wurde, deutlich höhere Scherfestigkeiten (Kohäsion) bei gleichbleibender Schälfestigkeit (Adhäsion) auf.

## Patentansprüche

**1.** Haftklebstoff auf Basis eines Polymerisats, welches eine Glasübergangstemperatur ≤ 10°C aufweist und durch eine radikalisch initiierte Polymerisation von ethylenisch ungesättigten Monomeren in einem flüssigen Medium in Anwesenheit von > 0 und ≤ 5 Gew.-Teilen, bezogen auf 100 Gew.-Teile der zur Polymerisation eingesetzten ethylenisch ungesättigten Monomeren, wenigstens einer oligomeren Verbindung erhalten wird, die ihrerseits durch radikalisch initiierte Polymerisation von ethylenisch ungesättigten Monomeren erhalten wurde und

a) einen Gehalt an ethylenisch ungesättigten Doppelbindungen von wenigstens 50 Mol-%, und

b) ein zahlenmittleres Molekulargewicht von 500 bis 50.000 g/mol aufweist.

**2.** Haftklebstoff nach Anspruch 1, wobei die oligomere Verbindung einen Gehalt an ethylenisch ungesättigten Doppelbindungen von wenigstens 70 Mol-% aufweist.

**3.** Haftklebstoff nach einem der Ansprüche 1 oder 2, wobei die ethylenisch ungesättigten Doppelbindungen in Form von Vinylidengruppen der allgemeinen Formel

$$>C=CH_2$$

vorliegen.

**4.** Haftklebstoff nach einem der Ansprüche 1 bis 3, wobei die oligomere Verbindung Säuregruppen enthält.

**5.** Haftklebstoff nach einem der Ansprüche 1 bis 4, wobei die oligomere Verbindung zu wenigstens 50 Gew.-% aus säuregruppenhaltigen ethylenisch ungesättigten Monomeren in einpolymerisierter Form aufgebaut ist.

6. Haftklebstoff nach einem der Ansprüche 1 bis 5, wobei die oligomere Verbindung ein zahlenmittleres Molekulargewicht von 1.000 bis 30.000 g/mol aufweist.

7. Haftklebstoff nach einem der Ansprüche 1 bis 6, wobei die oligomere Verbindung ein zahlenmittleres Molekulargewicht von 1.500 bis 20.000 g/mol aufweist.

8. Haftklebstoff nach einem der Ansprüche 1 bis 7, wobei die oligomere Verbindung ein zahlenmittleres Molekulargewicht von 2.000 bis 10.000 g/mol aufweist.

9. Haftklebstoff nach einem der Ansprüche 1 bis 8, wobei das Polymerisat durch eine radikalisch initiierte Polymerisation von ethylenisch ungesättigten Monomeren in Anwesenheit von 0,02 bis 3 Gew.-Teilen, bezogen auf 100 Gew.-Teile der zur Polymerisation eingesetzten ethylenisch ungesättigten Monomeren, der oligomeren Verbindung erhalten wird.

10. Haftklebstoff nach einem der Ansprüche 1 bis 9, wobei das Polymerisat durch eine radikalisch initiierte Polymerisation von ethylenisch ungesättigten Monomeren in Anwesenheit von 0,05 bis 2 Gew.-Teilen, bezogen auf 100 Gew.-Teile der zur Polymerisation eingesetzten ethylenisch ungesättigten Monomeren, der oligomeren Verbindung erhalten wird.

11. Haftklebstoff nach einem der Ansprüche 1 bis 10, wobei das Polymerisat durch eine radikalisch initiierte Polymerisation von ethylenisch ungesättigten Monomeren in Anwesenheit von 0,07 bis 1,5 Gew.-Teilen, bezogen auf 100 Gew.-Teile der zur Polymerisation eingesetzten ethylenisch ungesättigten Monomeren, einer oligomeren Verbindung erhalten wird.

12. Haftklebstoff nach einem der Ansprüche 1 bis 11, wobei das Polymerisat durch eine radikalisch initiierte wässrige Emulsionspolymerisation hergestellt wird.

13. Haftklebstoff nach einem der Ansprüche 1 bis 12, enthaltend zusätzlich ein klebrigmachendes Harz.

14. Mit Haftklebstoff gemäß einem der Ansprüche 1 bis 13 beschichtete Substrate.

15. Mit Haftklebstoff gemäß einem der Ansprüche 1 bis 13 beschichtete Bänder.

16. Mit Haftklebstoff gemäß einem der Ansprüche 1 bis 13 beschichtete Etiketten.

17. Verwendung eines Polymerisats gemäß einem der Ansprüche 1 bis 12 als Haftklebstoff.

## Claims

1. A pressure sensitive adhesive based on a polymer having a glass transition temperature ≤ 10°C and obtained by free-radically initiated polymerization of ethylenically unsaturated monomers in a liquid medium in the presence of > 0 and ≤ 5 parts by weight, based on 100 parts by weight of the ethylenically unsaturated monomers used for the polymerization, of at least one oligomeric compound itself obtained by free-radically initiated polymerization of ethylenically unsaturated monomers and having

   a) an ethylenically unsaturated double bond content of at least 50 mol% and

   b) a number-average molecular weight of from 500 to 50,000 g/mol.

2. An adhesive as claimed in claim 1, wherein the oligomeric compound has an ethylenically unsaturated double bond content of at least 70 mol%.

3. An adhesive as claimed in either of claims 1 and 2, wherein the ethylenically unsaturated double bonds are in the form of vinylidene groups of the formula

$$>C=CH_2.$$

4. An adhesive as claimed in any of claims 1 to 3, wherein the oligomeric compound comprises acid groups.

5. An adhesive as claimed in any of claims 1 to 4, wherein the oligomeric compound is composed in copolymerized form of at least 50% by weight of ethylenically unsaturated monomers containing acid groups.

6. An adhesive as claimed in any of claims 1 to 5, wherein the oligomeric compound has a number-average molecular weight of from 1000 to 30,000 g/mol.

7. An adhesive as claimed in any of claims 1 to 6, wherein the oligomeric compound has a number-average molecular weight of from 1500 to 20,000 g/mol.

8. An adhesive as claimed in any of claims 1 to 7, wherein the oligomeric compound has a number-average molecular weight of from 2000 to 10,000 g/mol.

9. An adhesive as claimed in any of claims 1 to 8, wherein the polymer is obtained by free-radically initiated polymerization of ethylenically unsaturated monomers in the presence of from 0.02 to 3 parts by weight, based on 100 parts by weight of the ethylenically unsaturated monomers used for the polymerization, of the oligomeric compound.

10. An adhesive as claimed in any of claims 1 to 9, wherein the polymer is obtained by free-radically initiated polymerization of ethylenically unsaturated monomers in the presence of from 0.05 to 2 parts by weight, based on 100 parts by weight of the ethylenically unsaturated monomers used for the polymerization, of the oligomeric compound.

11. An adhesive as claimed in any of claims 1 to 10, wherein the polymer is obtained by free-radically initiated polymerization of ethylenically unsaturated monomers in the presence of from 0.07 to 1.5 parts by weight, based on 100 parts by weight of the ethylenically unsaturated monomers used for the polymerization, of an oligomeric compound.

12. An adhesive as claimed in any of claims 1 to 11, wherein the polymer is prepared by free-radically initiated aqueous emulsion polymerization.

13. An adhesive as claimed in any of claims 1 to 12, further comprising a tackifying resin.

14. A substrate coated with an adhesive as claimed in any of claims 1 to 13.

15. A tape coated with an adhesive as claimed in any of claims 1 to 13.

16. A label coated with an adhesive as claimed in any of claims 1 to 13.

17. The use of a polymer as claimed in any of claims 1 to 12 as a pressure sensitive adhesive.

## Revendications

1. Adhésif à base d'un polymère, lequel présente une température de transition vitreuse ≤ 10°C et est obtenu au moyen d'une polymérisation amorcée par voie radicalaire à partir de monomères à insaturation éthylénique en milieu liquide, en présence de > 0 et ≤ 5 parties en poids, par rapport à 100 parties en poids des monomères à insaturation éthylénique utilisés pour la polymérisation, d'au moins un composé oligomère qui, de son coté, a été obtenu au moyen d'une polymérisation amorcée par voie radicalaire à partir de monomères à insaturation éthylénique et

   a) présentant une teneur en doubles liaisons éthyléniques d'au moins 50% en moles et
   b) une masse moléculaire moyenne en nombre allant de 500 à 50 000 g/mol.

2. Adhésif selon la revendication 1, dans lequel le composé oligomère présente une teneur en doubles liaisons éthyléniques d'au moins 70% en moles.

3. Adhésif selon l'une quelconque des revendications 1 ou 2, dans lequel les doubles liaisons éthyléniques sont présentes sous forme de groupes vinylidène de formule générale

>C=$CH_2$

4. Adhésif selon l'une quelconque des revendications 1 à 3, dans lequel le composé oligomère contient des groupes acide.

5. Adhésif selon l'une quelconque des revendications 1 à 4, dans lequel le composé oligomère est composé d'au moins 50% en poids de monomères à insaturation éthylénique contenant des groupes acides sous forme polymérisée.

6. Adhésif selon l'une quelconque des revendications 1 à 5, dans lequel le composé oligomère présente une masse moléculaire moyenne en nombre allant de 1 000 à 30 000 g/mol.

7. Adhésif selon l'une quelconque des revendications 1 à 6, dans lequel le composé oligomère présente une masse moléculaire moyenne en nombre allant de 1 500 à 20 000 g/mol.

8. Adhésif selon l'une quelconque des revendications 1 à 7, dans lequel le composé oligomère présente une masse moléculaire moyenne en nombre allant de 2 000 à 10 000 g/mol.

9. Adhésif selon l'une quelconque des revendications 1 à 8, dans lequel le polymère est obtenu au moyen d'une polymérisation amorcée par voie radicalaire à partir de monomères à insaturation éthylénique, en présence de 0,02 à 3 parties en poids, par rapport à 100 parties en poids des monomères à insaturation éthylénique utilisés pour la polymérisation, du composé oligomère.

10. Adhésif selon l'une quelconque des revendications 1 à 9, dans lequel le polymère est obtenu au moyen d'une polymérisation amorcée par voie radicalaire à partir de monomères à insaturation éthylénique, en présence de 0,05 à 2 parties en poids, par rapport à 100 parties en poids des monomères à insaturation éthylénique utilisés pour la polymérisation, du composé oligomère.

11. Adhésif selon l'une quelconque des revendications 1 à 10, dans lequel le polymère est obtenu au moyen d'une polymérisation amorcée par voie radicalaire à partir de monomères à insaturation éthylénique, en présence de 0,07 à 1,5 parties en poids, par rapport à 100 parties en poids des monomères à insaturation éthylénique utilisés pour la polymérisation, du composé oligomère.

12. Adhésif selon l'une quelconque des revendications 1 à 11, dans lequel le polymère est obtenu au moyen d'une polymérisation en émulsion aqueuse amorcée par voie radicalaire.

13. Adhésif selon l'une quelconque des revendications 1 à 12, contenant en plus une résine de pégosité.

14. Substrats revêtus d'un adhésif selon l'une quelconque des revendications 1 à 13.

15. Rubans revêtus d'un adhésif selon l'une quelconque des revendications 1 à 13.

16. Etiquettes revêtues d'un adhésif selon l'une quelconque des revendications 1 à 13.

17. Utilisation d'un polymère selon l'une quelconque des revendications 1 à 12 en tant qu'adhésif.